# EUROPÄISCHE PATENTSCHRIFT

(11) **EP 3 307 080 B1**
(45) Veröffentlichungstag und Bekanntmachung des Hinweises auf die Patenterteilung: **27.02.2019**
(21) Anmeldenummer: 16721618.3
(22) Anmeldetag: 18.03.2016
(51) Int. Cl.: A23L 29/30, A23L 27/30, A23G 3/38, A23L 29/206, A23L 33/22, A23L 33/125

(54) **SÜSSUNGSMITTEL SOWIE VERWENDUNG DESSELBEN**
SWEETENER AND USE THEREOF
ÉDULCORANT ET SON UTILISATION

(30) Priorität: 11.06.2015 AT 1442015 U
(43) Veröffentlichungstag der Anmeldung: 18.04.2018
(73) Patentinhaber: Reisenberger GmbH, 2380 Perchtoldsdorf (AT)
(72) Erfinder: REISENBERGER, Franz, 1230 Wien (AT); REISENBERGER, Klaus, 1230 Wien (AT)
(74) Vertreter: Cunow, Gerda
(86) Internationale Anmeldenummer: PCT/AT2016/000028
(87) Internationale Veröffentlichungsnummer: WO 2016/197157

(56) Entgegenhaltungen:
- EP-A1- 1 629 730
- EP-A1- 2 606 747
- WO-A1-2012/107206
- US-A1- 2013 216 661
- US-A1- 2014 199 246
- US-A1- 2014 212 562

## Beschreibung

Die vorliegende Erfindung bezieht sich auf ein Süßungsmittel enthaltend eine Mehrzahl von natürlichen oder synthetischen eine Süßkraft besitzenden Stoffen sowie eine Verwendung des Süßungsmittels.

Süßstoffe sowie Süßstoffmischungen sowohl synthetischen als auch natürlichen Ursprungs werden häufig eingesetzt, um den Nährwert von gesüßten Nahrungs- oder Genussmiltel drastisch herabzusetzen und gleichzeitig jedoch einen süßen Geschmack aufrecht zu erhalten, ohne dass es einen unangenehmen Nachgeschmack bzw. Geruch gibt. Diese Süßstoffe bzw. Süßstoffmischungen enthalten in diesem Zusammenhang häufig Substanzen, die als Zuckeraustauschstoffe verwendbar sind, welche jedoch häufig, insbesondere wenn sie natürlichen Ursprungs sind, eine relativ geringe Süßkraft besitzen und somit durch Stoffe ergänzt werden müssen, welche eine sehr hohe Süßkraft besitzen, um Süßstoffmischungen zur Verfügung stellen zu können, welche eine etwa Zucker vergleichbare Süßkraft besitzen.

Die Nachfrage nach Süßungsmitteln natürlichen oder synthetischen Ursprungs ist insbesondere darin begründet, dass die eingesetzten Substanzen einen zuckerähnlichen Aufbau besitzen, so besitzen beispielsweise manche Zuckeralkohole, welche anders als der herkömmliche verwendete Zucker, wie Rübenzucker. Rohrzucker oder auch Fruchtzucker eine bedeutend geringere Bioverfügbarkeit und somit von dem Verdauungstrakt nicht abgebaut werden können und als Ballaststoffe wieder ausgeschieden werden, nahezu keinen Nährwert besitzen. Andererseits werden als Süßstoffe bzw. Süßungsmittel häufig synthetische Süßstoffe eingesetzt, welche häufig eine sehr viel höhere Süßungskraft als natürlich vorkommende Zucker besitzen, so dass eine bedeutend geringere Menge eingesetzt werden kann. Jedoch weisen synthetische Süßstoffe normalerweise den Nachteil auf, dass sie einen relativ starken manchmal auch Beigeschmack zeigen und somit bei Einsatz von synthetischen Süßstoffen alleine der Verwender eine relativ lange Gewöhnungsdauer benötigt, um sich an den Geschmack der synthetischen Süßstoffe zu gewöhnen. Um den Beigeschmack dieser Substanzen zu maskieren, welche synthetischen oder natürlichen Ursprungs sind und die eine sehr hohe Süßungskraft besitzen, werden seit langen den Süßungsmitteln verschiedenste süß schmeckende Zusätze, wie Weinsäure, Zitronensäure, Chininsulfat und dgl. beigemischt, was insbesondere bei der Herstellung von Süßungsmitteln enthaltend Saccharin der Fall war, das Saccharin selbst einen sehr hohen Beigeschmack besitzt.

Zum Süßen von Nahrungsmitteln, Getränken oder auch Futtermitteln werden Süßstoffmischungen insbesondere deshalb eingesetzt, da sich der süße Geschmack von einzelnen Substanzen in der Mischung häufig synergistisch verstärkt, so dass dadurch eine Materialersparnis, d.h. eine Ersparnis an Süßstoffen erzielt werden kann bei gleichzeitig geringem Nährwert sowie Verträglichkeit für Diabetiker.

Aus der EP 1 629 730 A1 ist eine Zuckerersatzzusammensetzung bekannt geworden, umfassend eine voluminöse Faserzusammensetzung und eine Süßstoffzusammensetzung, wobei die voluminöse Faserzusammensetzung aus Poly- und Oligosacchariden besteht und die Süßstoffzusammensetzung einen intensiven Süßstoff in einer Menge enthält, die ausreichend ist, um ein etwa gleiche Süßkraft wie Zucker zu erreichen.

Aus der US 2014/0212562 A1 ist eine Süßstoffzusammensetzung bekannt geworden, welche eine Kombination aus einer Mehrzahl von Süßstoffen bzw. Ballaststoffen umfasst, bestehend aus Erythrithol, Inulin, Gummi arabicum, Steviaextrakt sowie eine Verbindung gewählt aus der Gruppe umfassend Ascorbinsäure, Milchsäure und Zitronensäure in unterschiedlichen Zusammensetzungen.

Aus der WO 2012/107206 A1 ist eine Süßstoffzusammensetzung bekannt geworden, umfassend ein Süßungsmittel und ein Mikrokarpalid oder ein Derivat oder Sterioisomer, Salz oder ein Hydrat desselben.

Schließlich beschreibt die US 2007/0116837 A1 eine Süßstoffzusammensetzung umfassend eine Faserquelle, einen hoch wirksamen Süßstoff und einen Geschmacksverbesserer.

Der EP 2 606 747 A1 sind Süßkraftverstärker, Süßstoffzusammensetzungen und genießbare Produkte, welche diese enthalten, entnehmbar. wobei sämtliche dieser Gegenstände Desoxikolsäure oder ein Derivat oder ein Stereoisomer oder ein Salz oder Hydrat davon enthalten.

Der US 2014/199246 A1 sind Steviolglykosid-haltige Zusammensetzungen zum Einsatz in der Nahrungs- bzw. Getränkeindustrie entnehmbar, welche wenigstens Reb B sowie einen weiteren Süßstoff aus der Gruppe bestehend aus Steviolglykosiden, Steviaextrakten, natürlichen Süßstoffen, glykosylierten Terpenoidsüßstoffen, synthetischen, hoch intensiven Süßstoffen, Oligosacchariden und kalorischen Süßstoffen besteht.

Nachteilig bei den meisten bekannten Süßstoffmischungen ist jedoch, dass diese häufig nur zum Süßen von Fertigspeisen verwendet werden können, dass sie jedoch zum Kochen oder Backen nicht gut einsetzbar sind, da sie entweder stark an Süßkraft verlieren oder aber der Beigeschmack der einzelnen in einer Süßstoffmischung bzw. einem Süßungsmittel enthaltenen Substanzen durch Backen und Kochen verstärkt wird und stark hervortritt oder die Textur des Endprodukts nicht den geforderten Standard entspricht.

Die vorliegenden Erfindung zielt nun darauf ab, ein Süßungsmittel zur Verfügung zu stellen, welches einen verbesserten Saccharose-ähnlichen Geschmack aufweist, im Wesentlichen dieselbe Süßkraft wie herkömmlicher Rüben- oder Rohrzucker besitzt und überdies zum Kochen und Backen eingesetzt werden kann, ohne dass sich einer der Bestandteile zersetzt, ein unangenehmer Nebengeschmack entsteht oder die Textur des fertigen Produktes nachteilig beeinflusst wird.

Zur Lösung dieser Aufgaben ist das erfindungsgemäße Süßungsmittel im Wesentlichen dadurch gekennzeichnet, dass wenigstens zwei Zuckeraustauschstoffe, nämlich Erythrit und ein weiterer Zuckeraustauschstoff, gewählt aus der Gruppe bestehend aus Sorbit, Mannit, Isomalt, Maltit, Lactit und Xylit sowie wenigstens ein Süßstoff und wenigstens ein Ballaststoff enthalten sind. Indem das Süßungsmittel aus drei Hauptbestandteilen, nämlich Zuckeraustauschstoffen, einem Süßstoff und einem Ballaststoff zusammensetzt ist, gelingt es, ein Süßungsmittel herzustellen, welches eine dem herkömmlichen Rüben- oder Rohrzucker vergleichbare Süßkraft aufweist, welches eine Saccharose-ähnlichkeit des Geschmacks besitzt und überdies so eingestellt werden kann, dass auch bei herkömmlichen Rüben- oder Rohrzucker vergleichbare Mengen des Süßungsmittels eingesetzt werden können. Durch Verwendung von Zuckeraustauschstoffen gewählt aus der Gruppe Erythrit, Sorbit, Mannit, Isomalt, Maltit, Lactit und Xylit werden süß schmeckende Kohlenhydrate eingesetzt, die für ihren geringen Einfluss auf den Blutzuckerspiegel bekannt sind und insbesondere Zuckeraustauschstoffe eingesetzt, die Insulin-unabhängig sind. Indem Erythrit als wenigstens ein Zuckeraustauschstoff enthalten ist, gelingt es, ein Süßungsmittel zur Verfügung zu stellen, das eine besonders hohe digestive Toleranz besitzt und nicht abführend wirkt oder Blähungen hervorruft. Bei Erythrit sind die bei den meisten anderen Zuckeraustauschstoffen bekannten Nebenwirken, wie die abführende Wirkung oder Blähungen stark vermindert, ohne dass es einen unangenehmen Beigeschmack hätte. Derartige Zuckeraustauschstoffe können daher sowohl von Diabetikern als auch gesunden Personen verwendet werden. Überdies ist der Beigeschmack von den gemäß der Erfindung eingesetzten Zuckeraustauschstoffen in fertigen Endprodukten nicht erkennbar.

Um die Süßkraft beliebig einstellen zu können und insbesondere ein Süßungsmittel zu erzielen, welches auch in Koch- und Backanwendungen bedenkenlos eingesetzt werden kann, wird zusätzlich wenigstens ein Süßstoff eingesetzt. Süßstoffe sind natürliche oder synthetische Substanzen, welche eine wesentlich höhere Süßkraft als Zuckeraustauschstoffe aufweisen und häufig als kalorienarm oder kalorienfrei bezeichnet werden. Süßstoffe haben hierbei eine Süßkraft, die mehrere 100 Mal stärker als jene von herkömmlichem Zucker sein können. Indem weiterhin ein Ballaststoff in der Mischung enthalten ist, gelingt es, die Menge der Mischung so einzustellen, dass sie jener von herkömmlichen Rübenzucker vergleichbar ist und auch im dieselbe Süßkraft besitzt, ohne dass das Süßungsmittel einen unangenehmen Beigeschmack hat, oder sich während des Kochens oder Backens zersetzt. Ein wesentlicher Vorteil des Süßungsmittels bestehend aus einem Zuckeraustauschstoff einem Süßstoff und einem Ballaststoff besteht jedoch darin, dass es die Textur während eines Kochens oder Backens eines Nahrungsmittels nicht nachteilig beeinflusst, sodass damit bedenkenlos Kuchen, Süßgebäcke oder auch Siedegebäcke hergestellt werden können, was mit herkömmlichen Süßungsmitteln nicht oder nur sehr eingeschränkt möglich war.

Gemäß einer Weiterbildung der Erfindung ist das Süßungsmittel dadurch gekennzeichnet, dass zwei Zuckeraustauschstoffe, insbesondere Erythrit und Isomalt enthalten sind. Neben Erythrit ist Isomalt ein Zuckeraustauschstoff, welcher einen sehr geringen Energiegehalt besitzt, jedoch Einflüsse aufweist, die vergleichbar jener von Saccharose sind. Darüber hinaus ist Isomalt schwer verdaulich und hat den Vorteil, dass es ähnlich der Saccharose schmilzt und gut wasserlöslich ist, wobei die Wasserlöslichkeit bei Erhöhung der Temperatur stark ansteigt, so dass es für den Einsatz in Koch- und Backanwendungen gut geeignet ist und insbesondere bei Einsatz zur Herstellung von Siedegebäcken die Textur der Produkte positiv beeinflusst.

Für die Herstellung eines als Zuckerersatz dienenden Süßungsmittels ist die Erfindung dahingehend weitergebildet, dass eine Gesamtmenge der Zuckeraustauschstoffe zwischen 59,5 und 94,95 Gew.-% des Süßungsmittels, insbesondere wenigstens 75 Gew.-% beträgt. Bei geringeren Mengen an Zuckeraustauschstoffen ist es erforderlich, eine hohe Menge an Ballaststoffen einzusetzen, um die erforderliche Textur des Süßungsmittels zur Verfügung stellen zu können, wo hingegen bei extrem hohen Mengen an Zuckeraustauschstoffen, insbesondere dann, wenn neben Erythrit ein anderer Zuckeraustauschstoff verwendet wird, das Süßungsmittel abführend wirken kann, so dass auf ein gezieltes Mengenverhältnis zwischen dem nicht abführenden Erythrit und wenigstens einem weiterer Zuckeraustauschstoff zu achten ist. Bevorzugt wird hierbei gemäß der Erfindung das Mengenverhältnis von Erythrit zu Isomalt zwischen 3:1 und 1:1 gewählt. Bei einem derartigen Mengenverhältnis gelingt es, ein Süßungsmittel zur Verfügung zu stellen, welches für Koch- und Backanwendungen gut geeignet ist und welches auch beispielsweise zur Herstellung von Siedegebäcken eingesetzt werden kann, da es bei Siedegebäcken erforderlich ist, dass Zucker bzw. das Süßungsmittel an der Außenoberfläche des Gebäcks im heißen Zustand eine Art Barriereschicht ausbildet, um das Eindringen von Fett in das Inneren des Gebäcks mit Sicherheit hintanzuhalten, wofür unter anderem das Verflüssigen des Zuckeraustauschstoffs erforderlich ist. Um eine derartige Verwendung gewährleisten zu können, ist das Süßungsmittel dahingehend weitergebildet, das Erythrit in einer Menge von bis 65 Gew.-% enthalten ist.

Indem, wie dies einer Weiterbildung der Erfindung entspricht, weiterhin der Ballaststoff aus Fruktanen, Inulin, Laevanen. Polydextrose oder Mischungen davon gewählt werden als Ballaststoffe natürliche Stoffe eingesetzt, wie beispielsweise Inulin, welches ein Gemisch von Polysacchariden aus langkettigen Fruktosemolekülen ist. Die gewählten Ballaststoffe verbessern sowohl die Textur der mit dem Süßungsmittel hergestellten Süßgebäcke als auch den Geschmack des damit versetzten Süßungsmittels und der daraus hergestellten Produkte, da sie sowohl den Eigengeschmack der Süßstoffe als auch jenen der Zuckeraustauschstoffe maskieren und selbst nahezu keinen Nachgeschmack besitzen.

Gemäß einer Weiterbildung der Erfindung enthält das Süßungsmittel zwischen 5 und 40 Gew.-% Ballaststoffe, insbesondere Inulin. In Inulin, welches im Wesentlichen als Ballaststoff verwendet wird, kann zusätzlich als Stärkeersatz dienen, da es den Blutzuckerspiegel nicht beeinflusst und im Dünndarm nicht resorbiert werden kann. Ein Inulin-haltiges Süßungsmittel ermöglicht daher in Abhängigkeit von der eingesetzten Menge des Ballaststoffes zusatzlich eine Verringerung der gegebenenfalls erforderlichen Menge an Stärke, woraus eine weiter verbesserte Eignung des Süßungsmittels bei der Herstellung von Süßgebäcken für Diabetiker folgt.

Um insbesondere ein Süßungsmittel zur Verfügung zu stellen, welches von der Süßkraft und der Textur der damit hergestellten Süßgebäcke jener von Saccharose vergleichbar ist die Erfindung dahingehend weitergebildet, dass ein Süßstoff natürlichen Ursprungs enthalten ist. Bei Süßstoffen natürlichen Ursprungs ist hier aus der Gruppe Neohesperidin-Dihydrochalkon (NHDC), Thaumatin, Steviolglykoside Brazzein und Mönchsfrucht gewählt. Indem der Süßstoff aus natürlichen Süßstoffen gewählt wird, welche eine Süßkraft von wenigstens 400 Mal jener von Saccharose besitzen, genügt es, geringe Mengen des Süßstoffs in dem Süßungsmittel einzusetzen. Gemäß einer Weiterbildung der Erfindung ist ein Verhältnis der Gesamtmenge der Zuckeraustauschstoffe zu dem Süßstoff zwischen 1900:1 und 120:1, insbesondere zwischen 800:1 und 300:1 gewählt. Mit einem derartigen Verhältnis gelingt es mit geringsten Mengen der Süßstoffe das Auslangen zu finden, wodurch ein Hervorschmecken der üblicherweise einer relativ charakteristischen Geschmack aufweisenden Süßstoffe aus dem Süßungsmittel hintangehalten wird, so dass der Geschmack des Süßungsmittels jener von Saccharose nahezu identisch ist und überdies auch bei damit hergestellten Nahrungsmitteln, wie Süßgebäcken eine Veränderung der Textur des Fertigproduktes nicht bewirkt wird, was z.B. bei Einsatz größerer Mengen an Süßstoffen üblicherweise der Fall ist.

Die Erfindung zielt weiterhin auf die Verwendung des Süßungsmittels gemäß der Erfindung zur Herstellung von Kuchen, Torten, Pudding oder Siedegebäcken ab, bei welchen das Süßungsmittel einer Erhitzung auf wenigstens 150 °C unterworfen wird. Das Süßungsmittel wird hierbei in Süßgebäcken, Hefegebäcken und Siedegebäcken eingesetzt, welche zusätzlich zu dem Süßungsmittel eine Mehrzahl von Substanzen gewählt aus Mehl, Ei nämlich Eiweiß und/oder Eigelb sowie gegebenenfalls wenigstens drei weiteren Bestandteilen gewählt aus: Fetten gewählt aus Butter Margarine und/oder Öl, Ballaststoffen wie Polydextrose, Treibmittel wie Backpulver oder Hefe, Befeuchtungsmittel wie Wasser oder Milch, Feuchthaltemittel wie Hydroxypropylmethylzellulose (HPMC), Carboxymethylcellulose (CMC), Emulgatoren wie Mono- und Diglyceride von Speisefettsäuren und/oder deren Mono- oder Diacetylweinsäureester, Mittel zu Verbesserung der Krumenweichheit und Verlängerung der Verzehrfrische, Salz, Aroma- und Geschmacksstoffe wie Vanille, Zitrone, Rum Aroma, Marmelade, insbesondere Diabetikermarmelade, Trockenfrüchte wie Rosinen, Erdbeeren, Himbeeren, Zwetschken und/oder Apfel enthalten. Bei der erfindungsgemäßen Verwendung gelingt es, Süßgebäcke, Hefegebäcke und Siedegebäcke herzustellen, welche gemäß herkömmlichen Rezepturen hergestellt werden können und welche einen Geschmack und eine Textur aufweisen, die von jenen, die mit Rüben- oder Rohrzucker hergestellt sind, nicht verschieden Schließlich wird bei der erfindungsgemäßen Verwendung das Süßungsmittel in einer Menge zwischen 1 Gew.-% und 10 Gew.-% des Süßgebäcks, Hefegebäcks oder Siedegebäcks eingesetzt.

Die Erfindung wird nachfolgend anhand von Ausführungsbeispielen erläutert.

### Süßungsmittel:

Es wurde eine Mehrzahl von Süßungsmitteln hergestellt und dieser in der Folge bei der Herstellung von Süßgebäcken, Hefegebäcken und Siedegebäcken zum Einsatz gebracht:

| | | |
|---|---|---|
| Süßungsmittel 1 | Erythritol | 49,8 Gew.-% |
| | Inulin | 10,0 Gew.-% |
| | Isomalt | 40,0 Gew.-% |
| | Neohresperidin-Dihydrochalkon | 0,2 Gew.-% |
| | | |
| Süßungsmittel 2 | Erythritol | 39,9 Gew.-% |
| | Inulin | 30,0 Gew.-% |
| | Sorbit | 20,0 Gew.-% |
| | Steviolglykoside | 0,1 Gew.-% |
| | | |
| Süßungsmittel 3 | Erythritol | 59,9 Gew.-% |
| | Polytextrose | 5 Gew.-% |
| | Isomalt | 35 Gew.-% |
| | Mönchsfrucht | 0,1 Gew.-% |
| | | |
| Süßungsmittel 4 | Erythritol | 59,7 Gew.-% |
| | Inulin | 30,0 Gew.-% |
| | Mannit | 10,0 Gew.-% |
| | Neohresperidin-Dihydrochalkon | 0,3 Gew.-% |
| | | |
| Süßungsmittel 5 | Erythritol | 55,95 Gew.-% |
| | 1:1 Mischung Inulin | und Laevanen, insgesamt 10 Gew.-% |
| | Isomalt | 34,0 Gew.-% |
| | Brazzein | 0,05 Gew.-% |

Die Süßungsmittel 1 bis 5 wurden zur Herstellung von verschiedenen Süßgebäcken, Hefegebäcken und Siedegebäcken eingesetzt, wobei nachfolgend gezeigten Zusammensetzungen gewählt wurden. Die Süßgebäcke, Hefegebäcke und Siedegebäcke wurden exakt nach den herkömmlichen und überlieferten Rezepten hergestellt, wobei Saccharose, insbesondere Rübenzucker durch das Süßungsmittel gemäß der Erfindung ersetzt wurde. Die auf diese Weise hergestellten Süßgebäcke, Hefegebäcke oder Siedegebäcke wiesen eine Textur auf, die von jener mit Saccharose gebackenen Süßgebäcken und Hefegebäcken nicht verschieden ist. Der Geschmack entsprach jenem von mit Saccharose hergestellten Süßgebäcken und die Verarbeitung unterschied sich in keiner Weise von der herkömmlichen Verarbeitung. Auch Ruhezeiten bei Hefegebäcken ebenso wie das Herausbacken in Fett bei Siedegebäcken erfolgten gemäß herkömmlichen Rezepten und Herstellungsverfahren. Die erhaltenen Produkte zeigten keine übermäßige Fettaufnahme oder ein zu geringes oder zu starkes Reagieren auf eingesetzte Treibmittel, auch das Aussehen entsprach herkömmlich hergestellten Produkten, insbesondere in Bezug auf die Oberflächenbräunung, das Aussehen und die innere Struktur des jeweiligen Gebäcks.

**Rezeptur: Zuckerfreie Biskuitroulade (Rouladengröße 20 cm x 15 cm)**

| | | |
|---|---|---|
| Biskuitroulade | 826,9 g | 100 % |
| Dotter | 200 g | 24,19 % |
| Eiweiß | 200 g | 24,19 % |
| Trockenfrüchte | 115 g | 13,90 % |
| Mehl | 110 g | 13,30 % |
| Süßungsmittel 1 | 80 g | 9,67 % |
| Polydextrose | 80 g | 9,67 % |
| Backmittel | 25 g | 3,02 % |
| E464 HPMC | 9 g | 1,09 % |
| Backpulver | 7,9 g | 0,96 % |

Unter Backmittel wird ein Hilfsmittel zur Verbesserung der Krummenweichheit und zur Verlängerung der Verzehrfrische verstanden.

**Rezeptur: Zuckerfreie Biskuittorte (Tortendurchmesser 22 cm)**

| | | |
|---|---|---|
| Biskuittorte | 711 g | 100 % |
| Dotter | 200 g | 28,09 % |
| Eiweiß | 200 g | 28,09 % |
| Mehl | 110 g | 15,45 % |
| Süßungsmittel 1 | 80 g | 12,24 % |
| Polydextrose | 80 g | 12,24 % |
| Backmittel | 25 g | 3,51 % |
| E464 HPMC | 9 g | 1,26 % |
| Backpulver | 7,9 g | 1,11 % |

**Rezeptur 1: Gugelhupf**

| | | |
|---|---|---|
| Gugelhupf | 611 g | 100 % |
| Süßungsmittel 1 | 145 g | 23,73 % |
| Eiweiß | 130 g | 21.28 % |
| Mehl | 100 g | 16,37 % |
| Dotter | 90 g | 14,73 % |
| Polydextrose | 70 g | 11,46 % |
| Margarine | 50 g | 8,18 % |
| Backpulver | 10 g | 1,64 % |
| Backmittel | 10 g | 1,64 % |
| E464 HPMC | 6 g | 1,09 % |

**Rezeptur 2: Gugelhupf**

| | | |
|---|---|---|
| Gugelhupf | 611 g | 100 % |
| Süßungsmittel 2 | 145 g | 23,73 % |
| Eiweiß | 130 g | 21,28 % |
| Mehl | 100 g | 16,37 % |
| Dotter | 90 g | 14,73 % |
| Polydextrose | 70 g | 11,46 % |
| Margarine | 50 g | 8,18 % |
| Backpulver | 10 g | 1,64 % |
| Backmittel | 10 g | 1,64 % |
| E464 HPMC | 6 g | 1,09 % |

**Rezeptur 3: Gugelhupf**

| | | |
|---|---|---|
| Gugelhupf | 611 g | 100 % |
| Süßungsmittel 3 | 145 g | 23,73 % |
| Eiweiß | 130 g | 21,28 % |
| Mehl | 100 g | 16,37 % |
| Dotter | 90 g | 14,73 % |
| Polydextrose | 70 g | 11,46 % |
| Margarine | 50 g | 8,18 % |
| Backpulver | 10 g | 1,64 % |
| Backmittel | 10 g | 1,64 % |
| E464 HPMC | 6 g | 1,09 % |

**Rezeptur 4: Gugelhupf**

| | | |
|---|---|---|
| Gugelhupf | 611 g | 100 % |
| Süßungsmittel 4 | 145 g | 23,73 % |
| Eiweiß | 130 g | 21,28 % |
| Mehl | 100 g | 16,37 % |
| Dotter | 90 g | 14,73 % |
| Polydextrose | 70 g | 11,46 % |
| Margarine | 50 g | 8,18 % |
| Backpulver | 10 g | 1,64 % |
| Backmittel | 10 g | 1,64 % |
| E464 HPMC | 6g | 1,09 % |

**Rezeptur 5: Gugelhupf**

| | | |
|---|---|---|
| Gugelhupf | 611 g | 100 % |
| Süßungsmittel 5 | 145 g | 23,73 % |
| Eiweiß | 130 g | 21,28 % |
| Mehl | 100 g | 16,37 % |
| Dotter | 90 g | 14,73 % |
| Polydextrose | 70 g | 11,46 % |
| Margarine | 50 g | 8,18 % |
| Backpulver | 10g | 1,64 % |
| Backmittel | 10 g | 1,64 % |
| E464 HPMC | 6 g | 1,09 % |

**Rezeptur: Rührkuchen**

| | | |
|---|---|---|
| Gugelhupf | 611 g | 100 % |
| Süßungsmittel 1 | 145 g | 23,73 % |
| Eiweiß | 130 g | 21,28 % |
| Mehl | 100 g | 16,37 % |
| Dotter | 90 g | 14,73 % |
| Polydextrose | 70 g | 11,46 % |
| Margarine | 50 g | 8,18 % |
| Backpulver | 10 g | 1,64 % |
| Backmittel | 10 g | 1,64 % |
| E464 (HPMC) | 6 g | 1,09 % |

**Rezeptur: Sachertorte:**

| | | |
|---|---|---|
| Sachertorte | 638 g | 100 % |
| Couverture | 130 g | 20,38 % |
| Butter | 130 g | 20,38 % |
| Vanillezucker | 5 g | 0,78 % |
| 1 Prise Salz | 1 g | 0,16% |
| Dotter | 6 g | 0,94 % |
| Eiklar | 6 g | 0,94 % |
| Süßungsmittel 1 | 220 g | 34,48 % |
| E464 (HPMC) | 10 | 1,57 % |
| Mehl | 130 g | 20,38 % |

**Rezeptur: Hefe und Siedegebäcke wie Krapfen, Donut, Berliner, Brioche und Striezel:**

| | |
|---|---|
| Krapfen | 100 % |
| Weizenmehl | 56,641 % |
| Gluten | 1,1 % |
| Eier | 16,66 % |
| Hefe | 4,4 % |
| Vanillearoma | 0,6 % |
| Salz | 0,825, % |
| Wasser | 16,66 % |
| Backmargarine | 0,9 % |
| Süßungsmittel 1 | 1,375 % |
| E471 | 0,083 % |
| E464 (HPMC) | 0,715 % |
| E472e | 0,041 % |

**Rezeptur: Hefe und Siedegebäcke wie Krapfen, Donut, Berliner, Brioche und Striezel:**

| | |
|---|---|
| Donuts | 100 % |
| Weizenmehl | 56,541 % |
| Gluten | 1,1 % |
| Eier | 16,66 % |
| Hefe | 4,4 % |
| Vanillearoma | 0,6 % |
| Salz | 0,9, % |
| Wasser | 16,66 % |
| Backmargarine | 1,0 % |
| Süßungsmittel 4 | 1,3 % |
| E471 | 0,083 % |
| E464 (HPMC) | 0,715 % |
| E472e | 0,041 % |

**Rezeptur: Hefe und Siedegebäcke wie Krapfen, Donut, Berliner, Brioche und Striezel:**

| | |
|---|---|
| Donuts | 100 % |
| Weizenmehl | 56,541 % |
| Gluten | 1,1 % |
| Eier | 16,61 % |
| Hefe | 4,4 % |
| Vanillearoma | 0,6 % |
| Salz | 0,9,% |
| Wasser | 16,66 % |
| Backmargarine | 1,0 % |
| Süßungsmittel 1 | 1,3 % |
| E471 | 0,083 % |
| Carboxymethylcellulose (CMC) | 0,72 % |
| E472e | 0,041 % |

## Patentansprüche

1. Süßungsmittel enthaltend eine Mehrzahl von natürlichen oder synthetischen eine Süßkraft besitzenden Stoffen, **dadurch gekennzeichnet, dass** zwei Zuckeraustauschstoffe, nämlich Erythrit und ein weiterer Zuckeraustauschstoff gewählt aus der Gruppe bestehend aus Sorbit, Mannit, Maltit, Lactit, Xylit und insbesondere Isomalt sowie wenigstens ein Süßstoff und wenigstens ein Ballaststoff enthalten sind.

2. Süßungsmittel nach Anspruch 1, **dadurch gekennzeichnet, dass** eine Gesamtmenge der Zuckeraustauschstoffe zwischen 59,5 und 94,95 Gew.-% des Süßungsmittels, insbesondere wenigstens 75 Gew.-% beträgt

3. Süßungsmittel nach Anspruch 1 oder 2, **dadurch gekennzeichnet, dass** das Mengenverhältnis von Erythrit zu Isomalt zwischen 3:1 und 1:1 gewählt ist.

4. Süßungsmittel nach Anspruch 1, 2 oder 3, **dadurch gekennzeichnet, dass** Erythrit in einer Menge von bis zu 65 Gew.-% enthalten ist.

5. Süßungsmittel nach einem der Ansprüche 1 bis 4, **dadurch gekennzeichnet, dass** der Ballaststoff aus Fruktanen, Inulin, Laevanen, Polydextrose oder Mischungen davon gewählt ist.

6. Süßungsmittel nach einem der Ansprüche 1 bis 5, **dadurch gekennzeichnet, dass** es zwischen 5 und 40 Gew.-% Ballaststoffe, insbesondere Inulin enthält.

7. Süßungsmittel nach einem der Ansprüche 1 bis 6, **dadurch gekennzeichnet, dass** ein Süßstoff natürlichen Ursprungs enthalten ist.

8. Süßungsmittel nach Anspruch 7, **dadurch gekennzeichnet, dass** der Süßstoff aus der Gruppe: Neohesperidin-Dihydrochalkon (NHDC), Thaumatin, Steviolglykoside, Brazzein und Mönchsfrucht gewählt ist.

9. Süßungsmittel nach einem der Ansprüche 1 bis 8, **dadurch gekennzeichnet, dass** ein Verhältnis der Gesamtmenge der Zuckeraustauschstoffe zu dem Süßstoff zwischen 1900:1 und 120:1, insbesondere zwischen 800:1 und 300:1 beträgt.

10. Verwendung des Süßungsmittel nach einem der Ansprüche 1 bis 9 in Süßgebäcken, Hefegebäcken und Siedegebäcken welche zusätzlich zu dem Süßungsmittel, Mehl, Ei nämlich Eiweiß und/oder Eigelb sowie gegebenenfalls wenigstens drei weitere Bestandteile gewählt aus: Fetten gewählt aus Butter Margarine und/oder Öl, Ballaststoffen wie Polydextrose, Treibmittel wie Backpulver oder Hefe, Befeuchtungsmittel wie Wasser oder Milch, Feuchthaltemittel wie Hydroxypropylmethylzellulose (HPMC), Carboxymethylcellulose (CMC), Emulgatoren wie Mono- und Diglyceride von Speisefettsäuren und/oder deren Mono- oder Diacetylweinsäureester, Mittel zu Verbesserung der Krummenweichheit und Verlängerung der Verzehrfrische, Salz, Aroma- und Geschmacksstoffe wie Vanille, Zitrone, Rum Aroma, Marmelade, insbesondere Diabetikermarmelade, Trockenfrüchte wie Rosinen, Erdbeeren, Himbeeren, Zwetschken und/oder Äpfel enthalten.

11. Verwendung nach Anspruch 10, **dadurch gekennzeichnet, dass** das Süßungsmittel in einer Menge zwischen 1 und 40 Gew.-% des Süßgebäcks, Hefegebäcks oder Siedegebäcks enthalten ist.

## Claims

1. A sweetener containing a plurality of natural or synthetic agents having a sweetening power, **characterized in that** two sugar substitutes, namely erythritol and a further sugar substitute selected from the group consisting of sorbitol, mannitol, maltitol, lactitol, xylitol and, in particular, isomalt, and at least one sweetening agent and at least one dietary fiber are contained.

2. A sweetener according to claim 1, **characterized in that** an overall amount of the sugar substitutes ranges between 59.5 and 94.95 wt%, in particular at least 75 wt%, of the sweetener.

3. A sweetener according to claim 1 or 2, **characterized in that** the quantitative proportion of erythritol to isomalt is selected between 3:1 and 1:1.

4. A sweetener according to claim 1, 2 or 3, **characterized in that** erythritol is contained in an amount of up to 65 wt%.

5. A sweetener according to any one of claims 1 to 4, **characterized in that** the dietary fiber is selected from fructans, inulin, laevans, polydextrose or mixtures thereof.

6. A sweetener according to any one of claims 1 to 5, **characterized in that** it comprises between 5 and 40 wt% dietary fiber, in particular inulin.

7. A sweetener according to any one of claims 1 to 6, **characterized in that** a sweetening agent of natural origin is contained.

8. A sweetener according to claim 7, **characterized in that** said sweetening agent is selected from the group consisting of neohesperidin dihydrochalcone (NHDC), thaumatin, steviol glycosides, brazzein and monk fruit.

9. A sweetener according to any one of claims 1 to 8, **characterized in that** a ratio of the overall amount of sugar substitutes to the sweetening agent ranges between 1900:1 and 120:1, in particular between 800:1 and 300:1.

10. The use of the sweetener according to any one of claims 1 to 9 in sweet pastries, yeast-risen pastries and deep-fried pastries, which, in addition to said sweetener, contain flour, egg, i.e. egg white and/or egg yolk, and optionally at least three further components selected from: fats selected from butter, margarine and/or oil, dietary fiber such as polydextrose, leavening agents such as baking powder or yeast, moisturizers such as water or milk, humectants such as hydroxypropylmethylcellulose (HPMC), carboxymethylcellulose (CMC), emulsifiers such as mono- and diglycerides of edible fatty acids and/or mono or diacetyl tartaric acid esters thereof, agents for enhancing the crumb softness and extending the eating freshness, salt, aromas and flavors such as vanilla, lemon, rum, jams and marmalades, in particular diabetic jams, dried fruit such as raisins, strawberries, raspberries, plums and/or apples.

11. The use according to claim 10, **characterized in that** the sweetener is contained in an amount ranging between 1 wt% and 40 wt% of the sweet pastry, yeast-risen pastry or deep-fried pastry.

## Revendications

1. Edulcorant contenant une pluralité de composés naturels ou synthétiques possédant un pouvoir sucrant, **caractérisé en ce que** deux substituts de sucre, à savoir l'érythritol et un autre substitut de sucre choisi dans le groupe constitué de sorbitol, mannitol, maltitol, lactitol, xylitol et en particulier isomalt, ainsi qu'au moins une substance édulcorante et au moins une fibre sont contenus.

2. Edulcorant selon la revendication 1, **caractérisé en ce qu'**une quantité totale des substituts de sucre se situe entre 59,5 et 94,95 % en poids de l'édulcorant, en particulier est d'au moins 75 % en poids.

3. Edulcorant selon la revendication 1 ou 2, **caractérisé en ce que** le rapport quantitatif d'érythritol à l'isomalt est choisi entre 3:1 et 1:1.

4. Edulcorant selon la revendication 1, 2 ou 3, **caractérisé en ce que** l'érythritol est contenu en une quantité allant jusqu'à 65 % en poids.

5. Edulcorant selon l'une des revendications 1 à 4, **caractérisé en ce que** la fibre est choisie parmi des fructanes, de l'inuline, des lévanes, des polydextroses ou des mélanges de ceux-ci.

6. Edulcorant selon l'une des revendications 1 à 5, **caractérisé en ce qu'**il contient entre 5 et 40 % en poids de fibres, en particulier d'inuline.

7. Edulcorant selon l'une des revendications 1 à 6, **caractérisé en ce qu'**une substance édulcorante d'origine naturelle est contenue.

8. Edulcorant selon la revendication 7, **caractérisé en ce que** la substance édulcorante est choisie dans le groupe : néohespéridine dihydrocharcone (NHDC), thaumatine, glycosides de stéviol, brazéine et fruit Monk.

9. Edulcorant selon l'une des revendications 1 à 8, **caractérisé en ce qu'**un rapport de la quantité totale des substituts de sucre à la substance édulcorante se situe entre 1900:1 et 120:1, en particulier entre 800:1 et 300:1.

10. Utilisation de l'édulcorant selon l'une des revendications 1 à 9 dans des pâtisseries, des viennoiseries et des produits de boulangerie frits qui contiennent, en plus de l'édulcorant, de la farine, des oeufs, à savoir des blancs d'oeufs et/ou des jaunes d'oeufs, ainsi qu'éventuellement au moins trois autres composants choisis parmi : des matières grasses choisies parmi le beurre, la margarine et/ou l'huile, des fibres telles que le polydextrose, des agents levants tels que de la poudre à lever ou de la levure, des agents humidifiants tels que de l'eau ou du lait, des agents humectants tels que l'hydroxypropylméthylcellulose (HPMC), la carboxyméthylcellulose (CMC), des émulsifiants tels que les mono- et diglycérides d'acides gras alimentaires et/ou leurs esters d'acide mono- ou diacétyltartrique, des agents pour l'amélioration de la tendreté et le prolongement de la fraîcheur jusqu'à la consommation, du sel, des arômes et des agents aromatisants tels que la vanille, le citron, l'arôme de rhum, la marmelade, en particulier la marmelade pour diabétiques, des fruits secs tels que les raisins secs, les fraises, les framboises, les prunes et/ou les pommes.

11. Utilisation selon la revendication 10, **caractérisée en ce que** l'édulcorant est contenu en une quantité entre 1 et 40 % en poids de la pâtisserie, de la viennoiserie et du produit de boulangerie frit.
